# FASCICULE DE BREVET EUROPEEN

(11) **EP 4 159 619 B1**
(45) Date de publication et mention de la délivrance du brevet: **20.12.2023**
(21) Numéro de dépôt: 22178002.6
(22) Date de dépôt: 09.06.2022
(51) Int. Cl.: B64C 27/26, B64C 13/18, B64C 27/57

(54) **PROCÉDÉ DE VOL STATIONNAIRE D'UN AÉRONEF AU REGARD D'UN AXE AVEC UN ANGLE DE TANGAGE PILOTABLE**
SCHWEBEFLUGVERFAHREN EINES LUFTFAHRZEUGS UM EINE ACHSE MIT EINEM STEUERBAREN NICKWINKEL
METHOD FOR HOVERING OF AN AIRCRAFT IN RELATION TO AN AXIS WITH CONTROLLABLE PITCH ANGLE

(30) Priorité: 29.09.2021 FR 2110186
(43) Date de publication de la demande: 05.04.2023
(73) Titulaire: Airbus Helicopters, 13725 Marignane Cedex (FR)
(72) Inventeur: ABDELLI, Kamel, 13011 MARSEILLE (FR)
(74) Mandataire: GPI Brevets

(56) Documents cités:
- FR-A1- 2 943 620
- FR-A1- 2 959 205
- FR-A1- 3 030 760

## Description

La présente invention concerne un procédé de vol stationnaire d'un aéronef au regard d'un axe avec un angle de tangage pilotable, et un aéronef appliquant ce procédé.

Un hélicoptère comporte au moins une voilure tournante et un système de contrôle du mouvement en lacet. Un hélicoptère peut rester stationnaire en vol. Toutefois, l'hélicoptère ne reste pas dans une position permanente contrôlée et maitrisée.

En effet, la cellule d'un hélicoptère est rendue stationnaire en vol en équilibrant la force de gravité exercée sur l'hélicoptère, la force générée par le vent, la force aérodynamique générée par la voilure tournante et la force aérodynamique générée par le système de contrôle du mouvement en lacet.

Un autre type de giravion comporte une aile ainsi qu'au moins une voilure tournante et au moins une hélice mises en permanence en mouvement en vol par une installation motrice. Ce giravion peut être qualifié de « hélicoptère hybride » dans le sens où il possède une voilure tournante tel un hélicoptère ainsi qu'une hélice et une aile tel un avion.

Le document US 2008/0237392 décrit un aéronef comprenant une voilure tournante et une aile. L'aéronef est de plus muni d'une hélice carénée à l'extrémité d'une poutre de queue. L'aéronef comporte divers organes de pilotage comprenant les pales de la voilure tournante et de l'hélice ainsi que divers volets de pilotage. L'aéronef comporte un système de commande permettant de respecter un objectif opérationnel sélectionné, tel que la minimisation de la consommation de carburant ou de vibrations voire la maximisation de la vitesse d'avancement ou encore la réduction de coûts de maintenance. Après sélection d'un objectif opérationnel, le système de commande applique la combinaison appropriée de réglages des organes de pilotage pour atteindre l'objectif sélectionné en réponse à la manoeuvre par le pilote de commandes de vol.

Le document FR 2959205 décrit un procédé de commande et de régulation d'un giravion à hélices à vitesse d'avancement élevée et stabilisée.

Le document FR 2977948 décrit un dispositif de pilotage automatique d'un aéronef à voilure tournante comprenant au moins une hélice propulsive. Ce dispositif comporte un moyen d'engagement d'un mode de pilotage de tenue d'incidence assistée relié à une unité de traitement, l'unité de traitement pilotant automatiquement le pas collectif des pales de la voilure tournante lorsque le mode de pilotage de tenue d'incidence assistée est engagé pour maintenir une incidence aérodynamique de l'aéronef sensiblement égale à une incidence de référence.

Le document EP 2966529 décrit un système de commande de vol pour les contrôles indépendants de la vitesse et de l'altitude en vol stationnaire d'un giravion ayant deux rotors contrarotatifs et une hélice. Le système comporte un générateur d'une référence d'assiette longitudinale et un générateur de référence longitudinale. La référence d'assiette longitudinale est transmise à un contrôleur rotor pour le pilotage des rotors. De plus, un convertisseur convertit la référence d'assiette longitudinale en un ajustement de propulsion. Un contrôleur d'hélice combine l'ajustement de propulsion et la référence longitudinale pour piloter l'hélice.

Le document FR 2991664 décrit un procédé de commandes de vol automatisées pour giravion, procurant une tenue de trajectoire du giravion par suivi de commandes de vol manuelles.

Le document FR 2 943 620 A1 décrit un procédé pour optimiser le point de fonctionnement de deux hélices d'un hélicoptère hybride.

Le document FR 3 030 760 A1 décrit un hélicoptère classique dépourvu d'une aile et d'au moins une hélice.

La présente divulgation a alors pour objet de proposer un procédé pour effectuer un vol stationnaire avec un hélicoptère hybride en gardant en visuel une référence lors d'un changement de cap, par exemple une zone d'atterrissage.

La présente divulgation concerne un procédé de vol stationnaire d'un aéronef, par rapport à une référence, l'aéronef ayant au moins une aile ainsi qu'au moins une voilure tournante et au moins une hélice, l'aéronef comprenant un système de pilotage automatique pilotant un pas de pales de ladite au moins une voilure tournante et un pas de pales de ladite au moins une hélice durant une phase de vol stationnaire à une position de consigne stationnaire à angle de tangage de consigne piloté.

Ce procédé comporte une phase de modification d'une position de consigne du vol stationnaire, ladite phase de modification comprenant une génération d'un ordre de déplacement avec une interface homme-machine de pilotage, une détermination en fonction dudit ordre de déplacement d'une vitesse latérale de consigne et d'une vitesse angulaire de consigne autour d'un axe de lacet de l'aéronef avec le système de pilotage automatique, et un déplacement de l'aéronef avec le système de pilotage automatique avec ledit angle de tangage de consigne en fonction de la vitesse angulaire de consigne et de la vitesse latérale de consigne.

Le système de pilotage automatique peut être d'un type usuel en comprenant un contrôleur communiquant avec divers senseurs pour commander divers actionneurs aptes à modifier notamment le pas des pales de la ou des voilures tournantes et de la ou des hélices.

Un hélicoptère hybride selon la présente divulgation comporte non seulement au moins une voilure tournante mais aussi au moins une hélice apte à produire une poussée selon deux sens opposés. Selon le procédé de l'invention, le système de pilotage automatique pilote alors le pas des pales de la ou des voilures tournantes mais aussi le pas de pales de la ou des hélices pour équilibrer automatiquement l'aéronef. La ou les hélices génèrent alors une force pouvant s'opposer à une force d'avancement ou de recul générée par la ou les voilures tournantes. Ainsi, ce procédé permet de maintenir l'aéronef stationnaire avec un angle de tangage réglable en fonction du souhait d'un pilote.

La phase de vol stationnaire peut être mise en oeuvre en manoeuvrant une interface dédiée. En outre, la phase de vol stationnaire réalisée automatiquement par le système de pilotage automatique peut être qualifiée de supra mode automatique. En effet, un mode de base d'un système de pilotage automatique agit sur un axe de contrôle, un tel axe pouvant être sur un hélicoptère conventionnel un axe de pilotage en tangage, un axe de pilotage en roulis, un axe de pilotage en lacet ou encore un axe de pilotage de montée/descente. Un mode supérieur d'un système de pilotage automatique agit sur deux axes de pilotage. Ici, la phase de vol stationnaire peut être réalisée par le système de pilotage automatique en mettant en oeuvre diverses boucles de régulation, éventuellement lente, pour agir sur les quatre axes de pilotage précédents plus un axe de pilotage en propulsion via la ou les hélices.

Un vol stationnaire peut donc être réalisé en faisant cabrer ou piquer l'aéronef au choix.

De plus, le procédé prévoit de pouvoir modifier la position de consigne du vol stationnaire en injectant une vitesse latérale de consigne et une vitesse angulaire de consigne en lacet dans des boucles de régulation. Il en résulte automatiquement que l'aéronef peut tendre à se déplacer sur un cercle autour d'un axe virtuel et par rapport à un centre de déplacement en présentant l'angle de tangage de consigne. L'axe de lacet de l'aéronef peut tendre à être déplacé le long d'un cône ayant un sommet au dessus de l'aéronef, ce sommet représentant le centre de déplacement. Dès lors, lors d'un changement de cap un pilote peut garder un contact visuel sur une référence située sensiblement au droit de l'axe virtuel, par exemple une zone d'atterrissage.

Ce procédé peut permettre d'améliorer de façon significative la visibilité d'un pilote vers une référence lors d'un changement de cap et un vol stationnaire.

Le procédé peut en outre comporter une ou plusieurs des caractéristiques qui suivent, prises seules ou en combinaison.

L'ordre de déplacement peut être porté par un signal décodé par un contrôleur du système de pilotage automatique. Par exemple, l'interface homme-machine de pilotage comporte un bouton d'incrémentation/décrémentation de type beep+/beep- pouvant augmenter ou réduire une consigne d'un incrément. Une autre interface homme-machine de pilotage peut être réalisée dans un mode tactique en manoeuvrant une commande, tel un palonnier, le cap de consigne étant égal à un objectif correspondant à la position du palonnier lorsque le pilote relâche son effort. Une interface homme-machine de pilotage peut comprendre un bouton, par exemple un rotacteur.

Le terme « signal » désigne dans cette description un signal électrique ou optique, numérique ou analogique par exemple.

Selon une première variante, l'ordre de déplacement peut être porteur de la vitesse angulaire de consigne et la détermination en fonction dudit ordre de déplacement d'une vitesse latérale de consigne et d'une vitesse angulaire de consigne autour d'un axe de lacet de l'aéronef peut comprendre une transformation avec le système de pilotage automatique de la vitesse angulaire de consigne en la vitesse latérale de consigne en fonction d'un rayon de consigne.

Selon une relation, la vitesse angulaire de consigne autour de l'axe de lacet est égale à la vitesse latérale de consigne de l'aéronef divisée par le rayon de consigne.

Le contrôleur décode l'ordre de déplacement pour en déduire la vitesse angulaire de consigne à partir de la relation précédente et en déduit la vitesse latérale de consigne.

Selon une deuxième variante, l'ordre de déplacement peut être porteur de la vitesse latérale de consigne et la détermination en fonction dudit ordre de déplacement d'une vitesse latérale de consigne et d'une vitesse angulaire de consigne autour d'un axe de lacet de l'aéronef peut comprendre une transformation avec le système de pilotage automatique de la vitesse latérale de consigne en la vitesse angulaire de consigne en fonction d'un rayon de consigne.

Le contrôleur décode l'ordre de déplacement pour en déduire la vitesse latérale de consigne à partir de la relation précédente et en déduit la vitesse angulaire de consigne.

Quelle que soit la variante, le procédé peut comporter un paramétrage dudit rayon de consigne avec une interface homme-machine de paramétrage. Une telle interface peut comprendre un clavier, un désignateur, une dalle tactile, un bouton...

Ce paramétrage permet de modifier la forme du cône le long duquel se déplace l'aéronef, par exemple pour optimiser la visibilité du pilote en fonction de son besoin.

Par ailleurs, le déplacement avec le système de pilotage automatique de l'aéronef peut comporter une régulation avec le système de pilotage automatique d'un pas de pales de ladite au moins une voilure tournante en fonction au moins de l'angle de tangage de consigne et de la vitesse latérale de consigne et une régulation avec le système de pilotage automatique d'une composante de pas différentiel de pales de deux organes tournants en fonction de la vitesse angulaire de consigne, lesdits deux organes tournants comprenant deux dites voilures tournantes ou deux dites hélices.

Selon une possibilité compatible avec les précédentes, la régulation d'un pas de pales de ladite au moins une voilure tournante peut comporter les étapes suivantes :
- régulation avec le système de pilotage automatique d'un angle de tangage courant en fonction de l'angle de tangage de consigne par pilotage d'une composante de pas cyclique longitudinal dudit pas des pales de ladite au moins une voilure tournante,
- régulation avec le système de pilotage automatique d'une vitesse latérale courante en fonction de la vitesse latérale de consigne par pilotage d'une composante de pas cyclique latéral dudit pas des pales de ladite au moins une voilure tournante, et
- régulation avec le système de pilotage automatique d'une altitude courante en fonction d'une altitude de consigne de la position de consigne par pilotage d'une composante de pas collectif dudit pas des pales de ladite au moins une voilure tournante, ladite altitude de consigne étant paramétrable avec au moins une interface homme-machine d'altitude.

Le terme « altitude » est à interpréter au sens large en désignant soit une hauteur, soit une altitude en tant que telle.

Selon une possibilité compatible avec les précédentes, la régulation avec le système de pilotage automatique d'un angle de tangage courant en fonction de l'angle de tangage de consigne peut comporter les étapes suivantes :
- mesure d'un angle de tangage courant,
- détermination d'une commande cyclique longitudinale avec une boucle de régulation en tangage, avec un contrôleur du système de pilotage automatique, asservissant l'angle de tangage courant en fonction dudit angle de tangage de consigne, et
- transmission de ladite commande cyclique longitudinale à au moins un actionneur rotor de pas cyclique longitudinal dudit système de pilotage automatique, ladite commande cyclique longitudinale étant porteuse d'un ordre de pilotage d'une composante de pas cyclique longitudinal dudit pas des pales de ladite au moins une voilure tournante.

Selon une possibilité compatible avec les précédentes, la régulation avec le système de pilotage automatique d'une vitesse latérale courante en fonction d'une vitesse latérale de consigne peut comporter les étapes suivantes :
- détermination d'une commande cyclique latérale avec une boucle de régulation latérale, avec un contrôleur du système de pilotage automatique, asservissant la vitesse latérale courante en fonction de la vitesse latérale de consigne, et
- transmission de ladite commande cyclique latérale à au moins un actionneur rotor de pas cyclique latéral dudit système de pilotage automatique, ladite commande cyclique latérale étant porteuse d'un ordre de pilotage d'une composante de pas cyclique latéral dudit pas des pales de ladite au moins une voilure tournante.

Selon une possibilité compatible avec les précédentes, la régulation avec le système de pilotage automatique d'une altitude courante en fonction d'une altitude de consigne peut comporter les étapes suivantes :
- détermination d'une commande collective de rotor avec une boucle de régulation d'altitude, avec un contrôleur du système de pilotage automatique, asservissant l'altitude courante en fonction de ladite altitude de consigne, et
- transmission de ladite commande collective rotor à au moins un actionneur rotor dudit système de pilotage automatique, ladite commande collective étant porteuse d'un ordre de pilotage d'une composante de pas collectif dudit pas des pales de ladite au moins une voilure tournante.

Selon une possibilité compatible avec les précédentes, la régulation avec le système de pilotage automatique d'une composante de pas différentiel de pales de deux organes tournants peut comporter une régulation avec le système de pilotage automatique d'une vitesse angulaire courante autour de l'axe de lacet en fonction de la vitesse angulaire de consigne par pilotage de la composante de pas différentiel.

Par exemple et en présence de deux hélices agencées de part et d'autre d'un plan antéropostérieur de l'aéronef, le pas des pales d'une hélice peut être égal à une composante de pas collectif plus la composante de pas différentiel alors que le pas des pales de l'autre hélice est égal à la composante de pas collectif moins la composante de pas différentiel.

En présence de deux voilures tournantes, le pas des pales des deux voilures tournantes peuvent comprendre une composante de pas collectif, une composante de pas cyclique longitudinale, une composante de pas cyclique latéral et une composante de pas différentiel.

Eventuellement, la régulation avec le système de pilotage automatique d'une vitesse angulaire courante autour de l'axe de lacet en fonction de la vitesse angulaire de consigne peut comporter les étapes suivantes :
- détermination d'une commande différentielle avec une boucle de régulation différentielle avec un contrôleur du système de pilotage automatique, asservissant la vitesse angulaire courante en fonction de la vitesse angulaire de consigne,
- transmission de ladite commande différentielle à au moins un actionneur de cap, ladite commande différentielle étant porteuse d'un ordre de pilotage d'une composante de pas différentiel dudit pas des pales des deux organes tournants.

Selon une possibilité compatible avec les précédentes, le déplacement avec le système de pilotage automatique de l'aéronef peut comporter une régulation avec le système de pilotage automatique d'une vitesse d'avancement courante en fonction d'une vitesse d'avancement de consigne par pilotage d'une composante de pas collectif dudit pas des pales de ladite au moins une hélice, la vitesse d'avancement de consigne étant nulle.

La régulation avec le système de pilotage automatique d'une vitesse d'avancement courante en fonction d'une vitesse d'avancement de consigne peut comporter les étapes suivantes :
- détermination d'une commande collective d'hélice avec une boucle de régulation de vitesse, avec un contrôleur du système de pilotage automatique, asservissant la vitesse d'avancement courante en fonction de la vitesse d'avancement de consigne,
- transmission de ladite commande collective d'hélice à au moins un actionneur d'hélice dudit système de pilotage automatique, ladite commande collective d'hélice étant porteuse d'un ordre de pilotage d'une composante de pas collectif dudit pas des pales de ladite au moins une hélice.

La présente invention a aussi pour objet un aéronef ayant au moins une aile ainsi qu'au moins une voilure tournante et au moins une hélice, l'aéronef comprenant un système de pilotage automatique. Le système de pilotage automatique est alors configuré pour appliquer le procédé de l'invention.

L'invention et ses avantages apparaîtront avec plus de détails dans le cadre de la description qui suit avec des exemples donnés à titre illustratif en référence aux figures annexées qui représentent :
la figure 1, un exemple d'aéronef selon l'invention ayant une voilure tournante,
la figure 2, un exemple d'aéronef selon l'invention ayant deux voilures tournantes,
la figure 3, un exemple de système de pilotage automatique appliquant le procédé de l'invention,
la figure 4, un exemple de système de pilotage automatique appliquant le procédé de l'invention,
la figure 5, un logigramme illustrant le procédé de l'invention,
la figure 6, un exemple de vol en stationnaire en piqué,
la figure 7, un exemple de vol en stationnaire à plat,
la figure 8, un exemple de vol en stationnaire à cabrer, et
la figure 9, un schéma illustrant le procédé de l'invention.

Les éléments présents dans plusieurs figures distinctes sont affectés d'une seule et même référence.

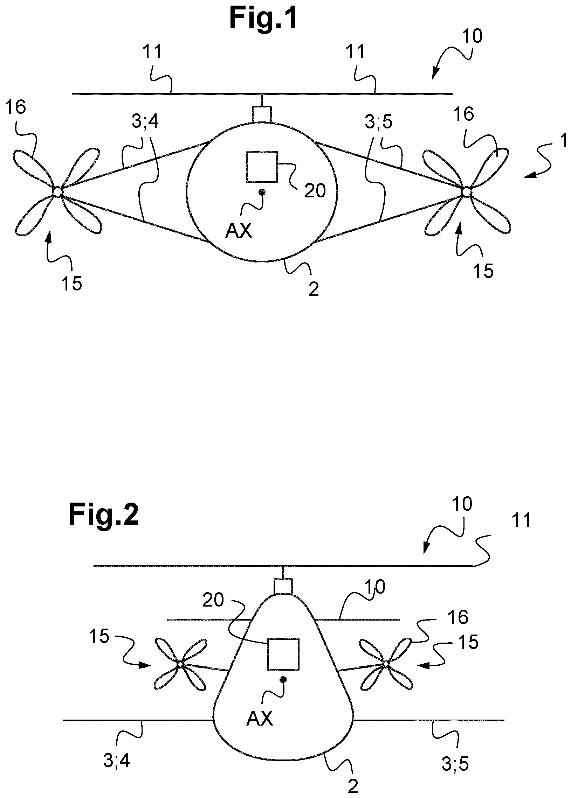

Les figures 1 et 2 présentent des aéronefs 1 selon l'invention.

Quelle que soit la réalisation et en référence à la figure 1 par exemple, un aéronef 1 peut comporter une cellule 2. La cellule 2 s'étend le long d'un axe longitudinal AX de référence d'une partie arrière vers une partie avant.

De plus, l'aéronef 1 comporte au moins une aile 3 solidaire de la cellule 2. L'aile 3 comporte deux demi-ailes 4, 5 situées transversalement de part et d'autre de la cellule 2. Chaque demiaile 4, 5 peut comprendre une unique partie sustentatrice comme selon la figure 2 ou plusieurs surfaces sustentatrices comme selon la figure 1.

Par ailleurs, l'aéronef 1 est un hélicoptère hybride comprenant au moins une voilure tournante 10 munie de pales 11 et au moins une hélice 15 munie de pales 16 mises en rotation par une installation motrice non représentée pour ne pas alourdir inutilement les figures. Cette installation motrice comporte à cet effet au moins un moteur voire un système mécanique d'interconnexion reliant le ou les moteurs à la ou aux voilures tournantes 10 et à la ou aux hélices 15. Les vitesses de rotation des sorties du ou des moteurs, de la ou des hélices 15, de la ou les voilures tournantes 10 et d'organes mobiles du système mécanique d'interconnexion sont éventuellement proportionnelles entre elles, le rapport de proportionnalité étant éventuellement constant quelle que soit la configuration de vol de l'aéronef 1 en conditions normales de fonctionnement, à savoir hors cas de panne ou d'essais ou de formation.

La figure 1 illustre un aéronef 1 ayant une unique voilure tournante 10 et deux hélices 15 disposées de part et d'autre de l'axe longitudinal AX, par exemple sur l'aile 3. Dans ce cas, le pas des pales 11 de la voilure tournante 10 présente une composante de pas collectif, une composante de pas cyclique latérale et une composante de pas cyclique longitudinale. Le pas des pales 16 des hélices 15 présente une composante de pas collectif et une composante de pas différentiel. Le pas des pales 16 d'une hélice 15 peut être égal à la somme de la composante de pas collectif et de la composante de pas différentiel, le pas des pales 16 de l'autre hélice 15 étant égal à la composante de pas collectif moins la composante de pas différentiel.

La figure 2 illustre un aéronef 1 ayant deux voilures tournantes 10 et au moins une hélice 15, telles deux hélices 15 selon l'exemple. Dans ce cas, le pas des pales 11 de chaque voilure tournante 10 peut présenter une composante de pas collectif, une composante de pas cyclique latérale, une composante de pas cyclique longitudinale et une composante différentielle. Le pas des pales 16 de la ou des hélices 15 présente une composante de pas collectif.

Ces exemples sont donnés à titre illustratif uniquement.

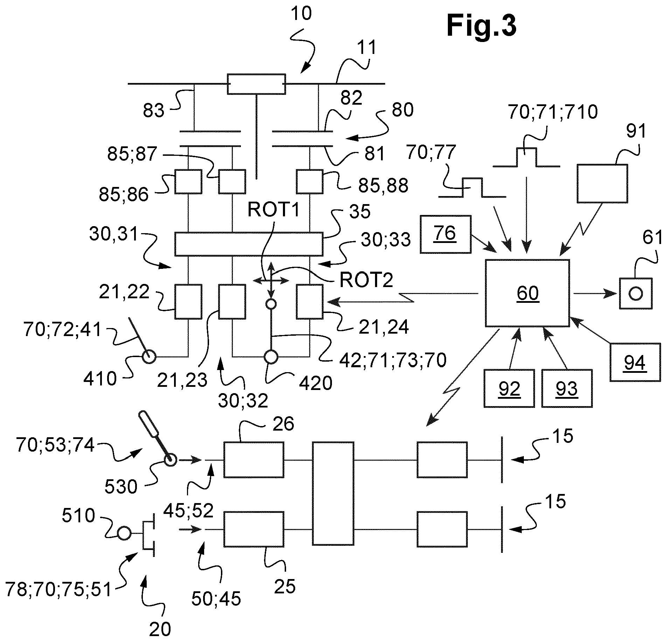

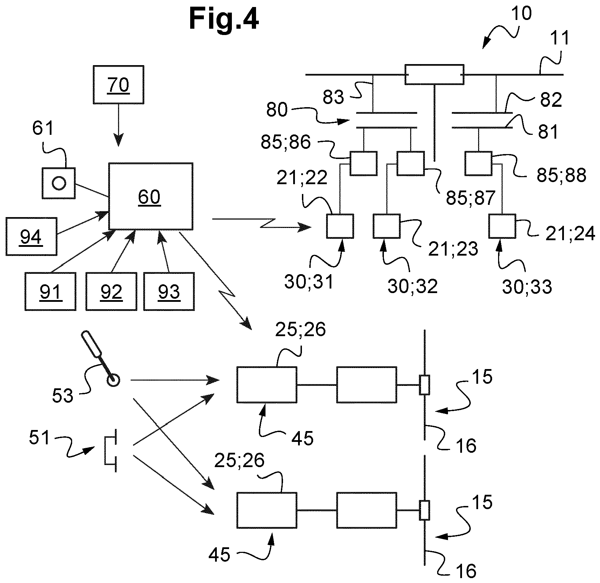

Quelle que soit la réalisation, l'aéronef 1 comporte un système de pilotage automatique 20 pour réaliser un vol stationnaire à angle de tangage piloté en pilotant le pas des diverses pales 11,16. Les figures 3 et 4 illustrent des exemples donnés à titre illustratifs.

En référence à la figure 3, le système de pilotage automatique 20 peut comprendre pour chaque voilure tournante 10 un système 80 à plateau cyclique. Un tel système 80 comporte usuellement un premier plateau 82 relié à chaque pale 11 de la voilure tournante 10 par une biellette de pas 83 et un deuxième plateau 81 articulé à une pluralité de servocommandes rotor 85. Les servocommandes rotor 85 peuvent comprendre au moins une servocommande rotor 86 agissant sur la composante de pas cyclique longitudinal et au moins une servocommande rotor 87, 88 agissant sur la composante pas cyclique latéral, les servocommandes rotors 85 pouvant agir conjointement sur la composante de pas collectif et la composante de pas différentiel éventuelle.

Les servocommandes rotor 85 sont en outre pilotées par des chaînes de commande 30 électromécaniques selon l'exemple de la figure 3 ou électriques selon l'exemple de la figure 4 comprenant chacune au moins un actionneur rotor 21.

Selon la figure 3, les chaînes de commande peuvent par exemple déboucher sur un combinateur 35 usuel relié aux servocommandes rotor 85. Une chaîne de commande collective 31 comporte au moins un actionneur rotor collectif 22 relié au combinateur 35 pour piloter conjointement les servocommandes rotor 85 de la même manière. Au moins une chaîne de commande cyclique longitudinale 32 peut comprendre au moins un actionneur rotor de pas cyclique longitudinal 23 et au moins une chaîne de commande cyclique latérale 33 peut comprendre au moins un actionneur rotor de pas cyclique latéral 24.

De la même manière, l'aéronef 1 comporte au moins une chaîne de poussée 45 électromécanique selon l'exemple de la figure 3 ou électrique selon l'exemple de la figure 4 pour piloter l'avancement de l'aéronef 1 via la ou les hélices 15. La chaîne de poussée 45 comporte au moins un actionneur d'hélice 26.

Pour piloter les mouvements en lacet de l'aéronef 1, l'aéronef 1 peut comprendre au moins une chaîne de commande de lacet 50 électromécanique ou électrique pour piloter une composante de pas différentiel des hélices 15 selon l'exemple illustré aux figures 1, 3 et 4 ou de deux voilures tournantes 10 selon la figure 2. Cette chaîne de commande de lacet 50 comporte au moins un actionneur de cap 25. Selon l'exemple de la figure 3, l'actionneur de cap 25 et l'actionneur d'hélice 26 sont reliés à un ou des combinateurs débouchant sur des distributeurs hydrauliques des hélices, le pas des pales 16 d'une hélice 15 étant égal à la somme des ordres donnés par ces actionneurs 25,26 et le pas des pales 16 de l'autre hélice 15 étant égal à la différence de ces ordres. Selon la figure 4, un même actionneur peut piloter un distributeur hydraulique d'une hélice 15 et peut former un actionneur de cap 25 et un actionneur d'hélice 26.

Les divers actionneurs rotor, d'hélice, et de cap peuvent en outre être commandés par un contrôleur 60 du système de pilotage automatique 20. Le contrôleur 60 peut comprendre par exemple au moins un processeur et au moins une mémoire, au moins un circuit intégré, au moins un système programmable, au moins un circuit logique, ces exemples ne limitant pas la portée donnée à l'expression « contrôleur ». Le terme processeur peut désigner aussi bien une unité centrale de traitement connue sous l'acronyme CPU, une unité graphique de traitement GPU, une unité digitale connue sous l'acronyme DSP, un microcontrôleur...

Le contrôleur 60 peut être en liaison filaire ou non filaire avec un senseur d'angle de tangage 91 usuel, tel qu'une centrale inertielle par exemple, un senseur d'altitude 92 usuel tel qu'un altimètre par exemple, un senseur de cap 93 usuel et un senseur 94 de vitesse angulaire autour de l'axe de lacet usuel.

Indépendamment des caractéristiques précédentes et en références à la figure 3 uniquement dans un but illustratif, l'aéronef 1 peut comprendre diverses interfaces 70, notamment pour piloter le pas des pales 11,16 de la ou des voilures tournantes 10 et des hélices 15.

L'aéronef 1 peut comprendre une interface homme-machine de paramétrage 77 pour paramétrer une valeur d'un rayon de consigne R*. Cette interface homme-machine de paramétrage 77 peut comprendre un bouton ou une dalle tactile ou autres transmettant un signal, au contrôleur 60, porteur du rayon de consigne R*.

Une interface homme-machine en tangage 71 peut comprendre un manche de commande cyclique 42 mettant en mouvement la chaîne de commande cyclique longitudinale 32 associée lorsqu'il est manoeuvré selon une première direction ROT1. Un senseur de position 420 peut transmettre au contrôleur 60 un signal porteur du déplacement ou de la position du manche de commande cyclique 42. De manière complémentaire ou alternative, une interface homme-machine en tangage 71 peut comprendre un bouton, un bouton d'incrémentation/décrémentation 710 de type beep+/beep-, un rotacteur ou autres transmettant un signal au contrôleur 60 porteur d'un angle de consigne en tangage.

Une interface homme-machine de position latérale 73 peut comprendre le manche de commande cyclique 42 mettant en mouvement la chaîne de commande cyclique latérale associée lorsqu'il est manoeuvré selon une deuxième direction ROT2. Le senseur de position 420 peut transmettre au contrôleur 60 un signal porteur du déplacement ou de la position du manche de commande cyclique 42. De manière complémentaire ou alternative, une interface homme-machine de position latérale 73 peut comprendre au moins un bouton, un beep ou autres transmettant un signal au contrôleur 60 porteur d'une vitesse latérale de consigne.

Une interface homme-machine de position longitudinale 74 peut comprendre un levier de poussée 53 mettant en mouvement la chaîne de poussée 45 le cas échéant. Un senseur de poussée 530 peut transmettre au contrôleur 60 un signal porteur du déplacement ou de la position du levier de poussée 53. L'interface homme-machine de position longitudinale 74 peut comprendre au moins un bouton, un beep ou autres transmettant un signal au contrôleur 60 porteur d'une vitesse longitudinale de consigne.

Une interface homme-machine d'altitude 72 peut comprendre un levier de pas collectif 41 mettant en mouvement la chaîne de commande collective associée lorsqu'il est manoeuvré. Un senseur de position 410 peut transmettre au contrôleur 60 un signal porteur du déplacement ou de la position du levier de pas collectif 41. De manière complémentaire ou alternative, une interface homme-machine d'altitude 72 peut comprendre au moins un bouton, un beep ou autres transmettant un signal au contrôleur 60 porteur d'une altitude de consigne.

Une interface homme-machine de pilotage 75 peut comprendre un palonnier 51 mettant en mouvement la chaîne de commande en lacet associée lorsqu'il est manoeuvré. Un senseur de position 510 peut transmettre au contrôleur 60 un signal porteur du déplacement ou de la position du palonnier 51. De manière complémentaire ou alternative, une interface homme-machine de pilotage 75 peut comprendre au moins un bouton, un beep ou autres transmettant un signal au contrôleur 60 porteur d'un cap de consigne.

Une interface d'activation de mode 76 peut transmettre un signal au contrôleur 60 pour activer le mode de tenue en stationnaire selon l'invention. Le contrôleur 60 peut communiquer en conséquence avec un alerteur 61, par exemple un voyant lumineux qui est alors allumé en cas d'activation du mode de tenue en stationnaire.

Les figures 1 à 4 illustrent diverses architectures et diverses interfaces. On se rapportera à la littérature, si nécessaire, pour avoir des exemples d'aéronef à voilure(s) tournante(s), aile(s) et hélice(s).

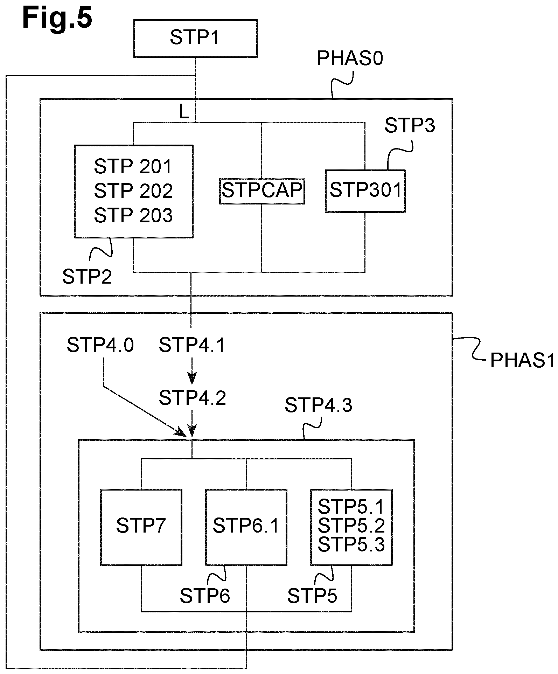

Indépendamment de ces aspects, la figure 5 présente un logigramme illustrant le procédé de l'invention de modification d'une phase de vol stationnaire.

Durant une phase de vol stationnaire PHAS0 l'aéronef 1 est maintenu automatiquement dans une position stationnaire en vol à une position de consigne ayant un angle de tangage de consigne réglable contrairement à des arts antérieurs connus.

Préalablement à la phase de vol stationnaire PHAS0, le procédé peut comporter une étape d'initialisation STP1. Par exemple, un pilote manoeuvre l'interface d'activation de mode 76. Cette interface d'activation de mode 76 transmet un signal au contrôleur 60 qui met alors en vol stationnaire l'aéronef 1 par rapport à une référence. Par exemple, le pilote met en vol stationnaire l'aéronef 1, puis manoeuvre l'interface d'activation de mode 76.

Eventuellement, le contrôleur 60 initialise l'angle de tangage de consigne, l'altitude de consigne et/ou le cap de consigne respectivement à l'angle de tangage courant mesuré avec le senseur d'angle de tangage 91, à l'altitude courante mesurée par le senseur d'altitude 92 et au cap courant mesuré avec un senseur de cap 93 usuel.

Selon un autre exemple, le contrôleur 60 initialise l'angle de tangage de consigne, l'altitude de consigne et le cap de consigne respectivement à des valeurs mémorisées ou paramétrées à l'aide d'une interface usuelle.

Quel que soit l'exemple et selon une possibilité, l'angle de tangage de consigne peut être initialisé à une valeur courante de l'angle de tangage lorsque cette valeur courante de l'angle de tangage est comprise dans une plage prédéterminée de valeurs. Par contre, l'angle de tangage de consigne peut être initialisé à une valeur mémorisée lorsque cette valeur courante de l'angle de tangage n'appartient pas à ladite plage.

Quel que soit l'exemple et selon une possibilité, l'altitude de consigne peut être initialisée à une valeur courante de l'altitude de l'aéronef 1 à une initialisation du procédé lorsque cette valeur courante de l'altitude de l'aéronef 1 est supérieure ou égale à une altitude minimale. Par contre, l'altitude de consigne est initialisée à une valeur mémorisée lorsque cette valeur courante de l'altitude de l'aéronef 1 est inférieure à l'altitude minimale.

Indépendamment de la réalisation, une position de consigne à atteindre en vol stationnaire est déterminée, la position de consigne comprenant de fait au moins un angle de tangage de consigne TANG* paramétrable avec au moins une interface homme-machine de tangage 71 de l'aéronef 1. La position de consigne peut ainsi résulter de l'initialisation ou d'une phase de modification PHAS1 de la position de consigne selon la présente divulgation décrite par la suite.

Indépendamment de ces aspects, la phase de vol stationnaire PHAS0 comporte le maintien de l'aéronef 1 en vol stationnaire, avec le système de pilotage automatique 20, dans la position de consigne. Le contrôleur 60 pilote le ou les actionneurs rotor 22, 23, 24, l'actionneur d'hélice 26 et l'actionneur de cap 25 pour maintenir l'aéronef 1 dans la position voulue. Ce maintien comprend une régulation STP3 avec le système de pilotage automatique 20 d'un pas des pales 16 de la ou des hélices 15 et une régulation STP2 avec le système de pilotage automatique 20 d'un pas des pales 11 de la ou des voilures tournantes 10.

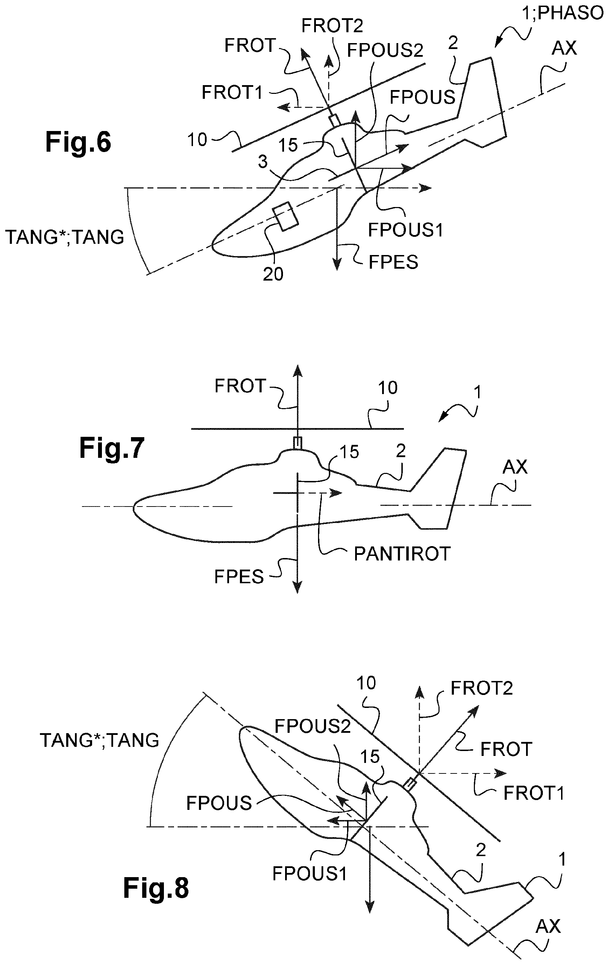

Les figures 6 à 8 illustrent cet aéronef 1 à divers moments, respectivement avec un angle de tangage à piquer, un angle de tangage nul et un angle de tangage à cabrer.

Les figures 6 à 8 illustrent un aéronef 1 à une voilure tournante et deux hélices, mais le fonctionnement est similaire pour un aéronef à deux voilures tournantes contrarotatives selon la figure 2.

A chaque instant, la ou les voilures tournantes 10 génèrent conjointement une force aérodynamique FROT comprenant un première composante horizontale FROT1 et une première composante verticale FROT2, et la ou les hélices 15 génèrent conjointement une force de poussée FPOUS comprenant un deuxième composante horizontale FPOUS1 et une deuxième composante verticale FPOUS2. Le couple exercé par une voilure tournante sur la cellule 2 est compensé selon la variante par l'autre voilure tournante 10 ou les hélices 15.

Selon la figure 6, la ou les voilures tournantes 10 et la ou les hélices 15 sont pilotées par le contrôleur 60 pour que la première composante horizontale FROT1 soit de même amplitude et opposée à la deuxième composante horizontale FPOUS1, et que la somme de la première composante verticale FROT2 et de la deuxième composante verticale FPOUS2 soit opposée et de même amplitude que la force de pesanteur FPES. La force aérodynamique FROT est ainsi dirigée vers le haut et l'avant sur la figure 6 alors que la force de poussée FPOUS est dirigée vers le haut et l'arrière.

Selon la figure 7, la ou les voilures tournantes 10 et la ou les hélices 15 sont pilotées par le contrôleur 60 pour que la première composante verticale FROT1 soit de même amplitude et opposée à la force de pesanteur FPES. Selon la variante, la ou les hélices 15 n'exercent pas de poussée ou seulement dans un but de compensation du couple généré par la voilure tournante illustrée 10 par la flèche PANTIROT.

Selon la figure 8, la ou les voilures tournantes 10 et la ou les hélices 15 sont pilotées par le contrôleur 60 pour que la première composante horizontale FROT1 soit de même amplitude et opposée à la deuxième composante horizontale FPOUS1, et que la somme de la première composante verticale FROT2 et de la deuxième composante verticale FPOUS2 soit opposée et de même amplitude que la force de pesanteur FPES. La force aérodynamique FROT est ainsi dirigée vers le haut et l'arrière sur la figure 8 alors que la force de poussée FPOUS est dirigée vers le haut et l'avant.

Pour atteindre ces positions et en référence à la figure 5, la régulation STP2 du pas de pales 11 de la ou des voilures tournantes 10 peut comporter la régulation STP2.1 avec le système de pilotage automatique 20, via une régulation proportionnelle intégrale ou autres, de l'angle de tangage courant TANG en fonction de l'angle de tangage de consigne TANG* par pilotage d'une composante de pas cyclique longitudinal dudit pas des pales 11 de la ou des voilures tournantes 10.

Par exemple, le procédé comporte à cet effet la mesure d'un angle de tangage courant. Un senseur d'angle de tangage 91 transmet ainsi un signal au contrôleur 60. Dès lors, le contrôleur 60 détermine une commande cyclique longitudinale avec une boucle de régulation en tangage asservissant l'angle de tangage courant en fonction dudit angle de tangage de consigne. Tant que l'angle de tangage courant est différent dudit angle de tangage de consigne une commande cyclique longitudinale est émise. Cette commande cyclique longitudinale est porteuse d'un ordre de pilotage d'une composante de pas cyclique longitudinal du pas des pales 11 de la ou des voilures tournantes 10, par exemple un pas à atteindre ou à modifier. Le contrôleur 60 transmet alors la commande cyclique longitudinale à au moins un actionneur rotor de pas cyclique longitudinal 23 dudit système de pilotage automatique 20.

Cette étape permet de maintenir en position l'aéronef 1 avec l'inclinaison en tangage souhaitée.

La régulation STP2 du pas de pales 11 de la ou des voilures tournantes 10 peut comporter la régulation STP2.2 avec le système de pilotage automatique 20, via une régulation proportionnelle intégrale ou autres, d'une vitesse latérale courante en fonction d'une vitesse latérale de consigne nulle par pilotage d'une composante de pas cyclique latéral du pas des pales 11 de la ou des voilures tournantes 10. Cette étape permet de maintenir en position l'aéronef 1 transversalement par rapport à la référence.

Eventuellement, le contrôleur 60 détermine une commande cyclique latérale avec une boucle de régulation latérale asservissant la vitesse latérale courante en fonction de la vitesse latérale de consigne. Tant que la vitesse latérale courante est différente de la vitesse latérale de consigne une commande cyclique latérale est émise. La commande cyclique latérale est porteuse d'un ordre de pilotage d'une composante de pas cyclique latéral du pas des pales 11 de la ou des voilures tournantes 10. Le contrôleur 60 transmet alors la commande cyclique latérale à au moins un actionneur rotor de pas cyclique latéral 24.

La régulation STP2 du pas de pales 11 de la ou des voilures tournantes 10 peut comporter la régulation STP2.3 avec le système de pilotage automatique 20, via une régulation proportionnelle intégrale ou autres, d'une altitude courante en fonction d'une altitude de consigne de la position de consigne par pilotage d'une composante de pas collectif du pas des pales 11 de la ou des voilures tournantes 10.

Par exemple, le contrôleur 60 détermine une commande collective de rotor avec une boucle de régulation d'altitude asservissant l'altitude courante en fonction de l'altitude de consigne. Tant que l'altitude courante est différente de l'altitude de consigne alors une commande collective de rotor est émise. La commande collective est porteuse d'un ordre de pilotage d'une composante de pas collectif du pas des pales 11 de la ou des voilures tournantes 10. Le contrôleur 60 transmet alors la commande collective rotor à au moins un actionneur rotor 21.

Selon un autre aspect, la régulation STP3 d'un pas de pales 16 de la ou des hélices 15 peut comporter la régulation STP3.1 avec le système de pilotage automatique 20, via une régulation proportionnelle intégrale ou autres, de la vitesse d'avancement courante de l'aéronef 1 en fonction d'une vitesse d'avancement nulle voire de l'angle de tangage de consigne par anticipation par pilotage d'une composante de pas collectif du pas des pales 16 de la ou des hélice 15. Cette étape permet de maintenir en position l'aéronef 1 longitudinalement par rapport à la référence.

Eventuellement, le contrôleur 60 détermine une commande collective d'hélice avec une boucle de régulation de vitesse asservissant la vitesse d'avancement courante de l'aéronef 1 en fonction de la vitesse d'avancement de consigne. Tant que la vitesse d'avancement courante est différente de la vitesse d'avancement de consigne alors une commande collective d'hélice est émise. La commande collective d'hélice est porteuse d'un ordre de pilotage d'une composante de pas collectif du pas des pales 16 de la ou des hélices 15. Le contrôleur 60 transmet la commande collective d'hélice à au moins un actionneur d'hélice 26.

Pour le contrôle du cap, l'aéronef 1 a deux organes tournants à savoir deux voilures tournantes 10 ou deux hélices 15. Dès lors, le système de pilotage automatique 20 effectue la régulation STPCAP d'un cap courant en fonction d'un cap de consigne de la position de consigne par pilotage d'une composante de pas différentiel dudit pas des pales 11,16 des deux organes tournants 10,15.

Par exemple, le contrôleur 60 détermine une commande différentielle avec une boucle de régulation de cap, via une régulation proportionnelle intégrale ou autre, asservissant le cap courant en fonction du cap de consigne. Tant que ce cap courant est différent du cap de consigne alors une commande différentielle est émise. La commande différentielle est porteuse d'un ordre de pilotage d'une composante de pas différentiel du pas des pales des deux organes tournants. Le contrôleur 60 transmet alors la commande différentielle à au moins un actionneur de cap 25.

Indépendamment de la manière de maintenir stationnaire l'aéronef 1, la position de consigne peut être modifiée en vol lors d'une phase de modification PHAS1 de la position de consigne.

Cette phase de modification PHAS1 de la position de consigne peut comporter uniquement un paramétrage de la vitesse latérale de consigne avec au moins une interface homme-machine de position latérale 73. En conséquence, le système de pilotage automatique 20 déplace latéralement l'aéronef 1.

Cette phase de modification PHAS1 de la position de consigne peut comporter un paramétrage de la vitesse d'avancement de consigne avec au moins une interface homme-machine de position longitudinale 74. En conséquence, le système de pilotage automatique 20 déplace longitudinalement l'aéronef 1.

Cette phase de modification PHAS1 de la position de consigne peut comporter une modification du cap de l'aéronef 1 en tournant autour d'un axe virtuel selon l'invention.

A cet effet, la phase de modification PHAS1 comprend la génération STP4.1 d'un ordre de déplacement avec l'interface homme-machine de pilotage 75. Par exemple, le pilote déplace le palonnier 51.

Dès lors, la phase de modification PHAS1 comprend, la détermination STP4.2 en fonction de l'ordre de déplacement d'une vitesse latérale de consigne VLAT* et d'une vitesse angulaire de consigne OMG* autour d'un axe de lacet de l'aéronef 1 avec le contrôleur 60.

Selon une première variante, l'ordre de déplacement est porteur de la vitesse angulaire de consigne OMG*. Le contrôleur 60 détermine alors, avec une loi mémorisée, la vitesse latérale de consigne VLAT* en fonction de la vitesse angulaire de consigne OMG* et d'un rayon de consigne R*. Par exemple, la vitesse latérale de consigne VLAT* est égale au produit de la vitesse angulaire de consigne OMG* par le rayon de consigne R*.

Selon la deuxième variante, l'ordre de déplacement est porteur de la vitesse latérale de consigne VLAT*. Le contrôleur 60 détermine avec une loi mémorisée la vitesse angulaire de consigne OMG* en fonction de la vitesse latérale de consigne VLAT* et du rayon de consigne R*. Par exemple, la vitesse angulaire de consigne OMG* est égale à la division de la vitesse latérale de consigne VLAT* par le rayon de consigne R*.

Ce rayon de consigne R* est soit fixe, soit paramétrable avec l'interface homme-machine de paramétrage 77 durant une étape STP4.0.

Dès lors, la phase de modification PHAS1 comprend le déplacement STP4.3 avec le système de pilotage automatique 20 de l'aéronef 1, en maintenant cet aéronef avec l'angle de tangage de consigne TANG*, en fonction de la vitesse angulaire de consigne OMG* et de la vitesse latérale de consigne VLAT*.

Par exemple, le système de pilotage automatique 20 effectue la régulation STP5 du pas des pales 11 de la ou des voilures tournantes 10 en fonction au moins de l'angle de tangage de consigne TANG* et de la vitesse latérale de consigne VLAT*. De plus, le système de pilotage automatique 20 effectue la régulation STP7 d'une composante de pas différentiel de pales 11,16 des deux dites voilures tournantes 10 ou des deux dites hélices 15 selon la réalisation.

La régulation STP5 d'un pas de pales 11 de la ou les voilures tournantes 10 peut comprendre :
- régulation STP5.1 avec le système de pilotage automatique 20, via une régulation proportionnelle intégrale ou autres, de l'angle de tangage courant TANG en fonction de l'angle de tangage de consigne TANG* par pilotage d'une composante de pas cyclique longitudinal dudit pas des pales 11 de la ou des voilures tournantes 10, par exemple tel qu'expliqué à l'étape STP 2.1,
- régulation STP5.2 avec le système de pilotage automatique 20, via une régulation proportionnelle intégrale ou autres, d'une vitesse latérale courante en fonction de la vitesse latérale de consigne VLAT* par pilotage d'une composante de pas cyclique latéral du pas des pales 11 de la ou des voilures tournantes 10, par exemple tel qu'expliqué à l'étape STP 2.2,
- régulation STP5.3 avec le système de pilotage automatique 20, via une régulation proportionnelle intégrale ou autres, d'une altitude courante en fonction d'une altitude de consigne de la position de consigne par pilotage d'une composante de pas collectif du pas des pales 11 de la ou des voilures tournantes 10, par exemple tel qu'expliqué à l'étape STP 2.3.

Par ailleurs, la régulation STP7 avec le système de pilotage automatique 20 d'une composante de pas différentiel de pales 11, 16 des deux organes tournants comporte la régulation avec le système de pilotage automatique 20 d'une vitesse angulaire courante autour de l'axe de lacet en fonction de la vitesse angulaire de consigne OMG* par pilotage de la composante de pas différentiel.

Par exemple, le contrôleur 60 détermine une commande différentielle avec une boucle de régulation différentielle, via une régulation proportionnelle intégrale ou autres, asservissant la vitesse angulaire courante en fonction de la vitesse angulaire de consigne OMG*. Tant que la vitesse angulaire courante mesurée est différente de la vitesse angulaire de consigne OMG* alors une commande différentielle est émise. La commande différentielle est porteuse d'un ordre de pilotage d'une composante de pas différentiel du pas des pales 11,16 des deux organes tournants. Le contrôleur 60 transmet alors la commande différentielle à au moins un actionneur de cap 25.

Par ailleurs, la phase de modification peut comporter la régulation STP6 d'un pas de pales 16 de ladite au moins une hélice 15 qui comprend la régulation STP6.1 avec le système de pilotage automatique 20, via une régulation proportionnelle intégrale ou autres, de la vitesse d'avancement courante de l'aéronef 1 en fonction d'une vitesse d'avancement nulle voire de l'angle de tangage de consigne par anticipation par pilotage d'une composante de pas collectif du pas des pales 16 de la ou des hélice 15, par exemple tel qu'expliqué à l'étape STP 2.3.

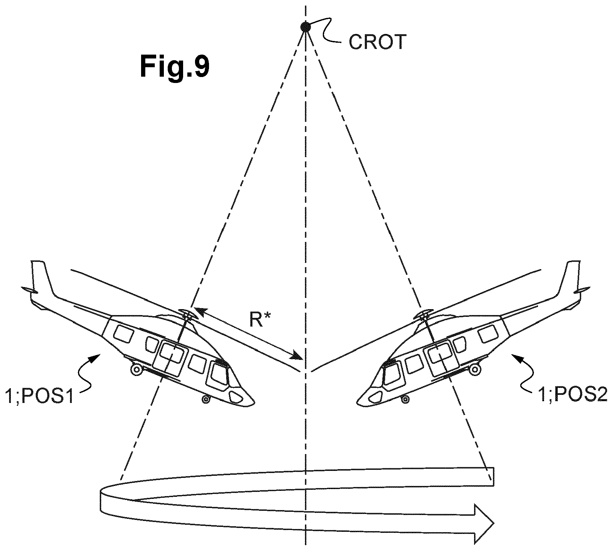

En référence à la figure 9, cette phase de modification permet de déplacer l'aéronef 1 d'une position stationnaire initiale POS1 vers une position finale POS2 en suivant un cône de sommet CROT. Le rayon de consigne R* est une distance allant du centre de gravité de l'aéronef à un axe de symétrie du cône selon l'axe de roulis de l'aéronef. En maintenant un angle tangage à piquer, le pilote peut toujours avoir en visuel une référence disposée selon l'axe de symétrie du cône.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention, qui est définit par les revendications annexées.

## Revendications

1. Procédé de vol stationnaire d'un aéronef (1) ayant au moins une aile (3) ainsi qu'au moins une voilure tournante (10) et au moins une hélice (15), l'aéronef (1) comprenant un système de pilotage automatique (20) pilotant un pas de pales (11) de ladite au moins une voilure tournante (10) et un pas de pales (16) de ladite au moins une hélice (15) durant une phase de vol stationnaire (PHAS0) à une position de consigne stationnaire à angle de tangage de consigne piloté, le procédé comportant une phase de modification (PHAS1) de la position de consigne, ladite phase de modification (PHAS1) comprenant une génération (STP4.1) d'un ordre de déplacement avec une interface homme-machine de pilotage (75),
**caractérisé en ce que** ladite phase de modification (PHAS1) comprend une détermination (STP4.2) en fonction dudit ordre de déplacement d'une vitesse latérale de consigne (VLAT*) et d'une vitesse angulaire de consigne (OMG*) autour d'un axe de lacet de l'aéronef (1) avec le système de pilotage automatique (20), et un déplacement (STP4.3) de l'aéronef avec le système de pilotage automatique (20) avec ledit angle de tangage de consigne (TANG*) en fonction de la vitesse angulaire de consigne (OMG*) et de la vitesse latérale de consigne (VLAT*).

2. Procédé selon la revendication 1,
où ledit ordre de déplacement est porteur de la vitesse angulaire de consigne (OMG*) et la détermination (STP4.2) en fonction dudit ordre de déplacement d'une vitesse latérale de consigne (VLAT*) et d'une vitesse angulaire de consigne (OMG*) autour d'un axe de lacet de l'aéronef (1) comprend une transformation avec le système de pilotage automatique (20) de la vitesse angulaire de consigne (OMG*) en la vitesse latérale de consigne (VLAT*) en fonction d'un rayon de consigne (R*).

3. Procédé selon la revendication 1,
où ledit ordre de déplacement est porteur de la vitesse latérale de consigne (VLAT*) et la détermination (STP4.2) en fonction dudit ordre de déplacement d'une vitesse latérale de consigne (VLAT*) et d'une vitesse angulaire de consigne (OMG*) autour d'un axe de lacet de l'aéronef (1) comprend une transformation avec le système de pilotage automatique (20) de la vitesse latérale de consigne (VLAT*) en la vitesse angulaire de consigne (OMG*) en fonction d'un rayon de consigne (R*).

4. Procédé selon l'une quelconque des revendications 2 à 3,
où le procédé comporte un paramétrage (STP4.0) dudit rayon de consigne (R*) avec une interface homme-machine de paramétrage (77).

5. Procédé selon l'une quelconque des revendications 1 à 4,
où ledit déplacement (STP4.3) avec le système de pilotage automatique de l'aéronef (1) comporte une régulation (STP5) avec le système de pilotage automatique (20) d'un pas de pales (11) de ladite au moins une voilure tournante (10) en fonction au moins de l'angle de tangage de consigne (TANG*) et de la vitesse latérale de consigne (VLAT*) et une régulation (STP7) avec le système de pilotage automatique (20) d'une composante de pas différentiel de pales (11, 16) de deux organes tournants en fonction de la vitesse angulaire de consigne (OMG*), lesdits deux organes tournants comprenant deux dites voilures tournantes (10) ou deux dites hélices (15).

6. Procédé selon la revendication 5,
où ladite régulation (STP5) d'un pas de pales (11) de ladite au moins une voilure tournante (10) comporte les étapes suivantes :
- régulation (STP5.1) avec le système de pilotage automatique (20) d'un angle de tangage courant (TANG) en fonction de l'angle de tangage de consigne (TANG*) par pilotage d'une composante de pas cyclique longitudinal dudit pas des pales (11) de ladite au moins une voilure tournante (10),
- régulation (STP5.2) avec le système de pilotage automatique (20) d'une vitesse latérale courante en fonction de la vitesse latérale de consigne (VLAT*) par pilotage d'une composante de pas cyclique latéral dudit pas des pales (11) de ladite au moins une voilure tournante (10),),
- régulation (STP5.3) avec le système de pilotage automatique (20) d'une altitude courante en fonction d'une altitude de consigne de la position de consigne par pilotage d'une composante de pas collectif dudit pas des pales (11) de ladite au moins une voilure tournante (10).

7. Procédé selon la revendication 6,
où la régulation (STP5.1) avec le système de pilotage automatique (20) d'un angle de tangage courant en fonction de l'angle de tangage de consigne (TANG*) comporte les étapes suivantes :
- mesure d'un angle de tangage courant,
- détermination d'une commande cyclique longitudinale avec une boucle de régulation en tangage, avec un contrôleur (60) du système de pilotage automatique (20), asservissant l'angle de tangage courant en fonction dudit angle de tangage de consigne(TANG*),
- transmission de ladite commande cyclique longitudinale à au moins un actionneur rotor de pas cyclique longitudinal (23) dudit système de pilotage automatique (20), ladite commande cyclique longitudinale étant porteuse d'un ordre de pilotage d'une composante de pas cyclique longitudinal dudit pas des pales (11) de ladite au moins une voilure tournante (10).

8. Procédé selon l'une quelconque des revendications 6 à 7,
où la régulation (STP5.2) avec le système de pilotage automatique (20) d'une vitesse latérale courante en fonction d'une vitesse latérale de consigne (VLAT*) comporte les étapes suivantes :
- détermination d'une commande cyclique latérale avec une boucle de régulation latérale, avec un contrôleur (60) du système de pilotage automatique (20), asservissant la vitesse latérale courante en fonction de la vitesse latérale de consigne(VLAT*),
- transmission de ladite commande cyclique latérale à au moins un actionneur rotor de pas cyclique latéral (24) dudit système de pilotage automatique (20), ladite commande cyclique latérale étant porteuse d'un ordre de pilotage d'une composante de pas cyclique latéral dudit pas des pales (11) de ladite au moins une voilure tournante (10).

9. Procédé selon l'une quelconque des revendications 6 à 8,
où la régulation (STP5.3) avec le système de pilotage automatique (20) d'une altitude courante en fonction d'une altitude de consigne comporte les étapes suivantes :
- détermination d'une commande collective de rotor avec une boucle de régulation d'altitude, avec un contrôleur (60) du système de pilotage automatique (20), asservissant l'altitude courante en fonction de ladite altitude de consigne,
- transmission de ladite commande collective rotor à au moins un actionneur rotor (21) dudit système de pilotage automatique (20), ladite commande collective étant porteuse d'un ordre de pilotage d'une composante de pas collectif dudit pas des pales (11) de ladite au moins une voilure tournante (10).

10. Procédé selon l'une quelconque des revendications 5 à 9,
où la régulation (STP7) avec le système de pilotage automatique (20) d'une composante de pas différentiel de pales (11, 16) de deux organes tournants comporte une régulation avec le système de pilotage automatique (20) d'une vitesse angulaire courante autour de l'axe de lacet en fonction de la vitesse angulaire de consigne (OMG*) par pilotage de la composante de pas différentiel.

11. Procédé selon la revendication 10,
où la régulation (STP7) avec le système de pilotage automatique (20) d'une vitesse angulaire courante autour de l'axe de lacet en fonction de la vitesse angulaire de consigne (OMG*) comporte les étapes suivantes :
- détermination d'une commande différentielle avec une boucle de régulation différentielle avec un contrôleur (60) du système de pilotage automatique (20), asservissant la vitesse angulaire courante en fonction de la vitesse angulaire de consigne(OMG*),
- transmission de ladite commande différentielle à au moins un actionneur de cap (25), ladite commande différentielle étant porteuse d'un ordre de pilotage d'une composante de pas différentiel dudit pas des pales (11,16) des deux organes tournants.

12. Procédé selon l'une quelconque des revendications 1 à 11,
où ledit déplacement avec le système de pilotage automatique de l'aéronef (1) comporte une régulation (STP6) d'un pas de pales (16) de ladite au moins une hélice (15) qui comprend une régulation (STP6.1) avec le système de pilotage automatique (20) d'une vitesse d'avancement courante en fonction d'une vitesse d'avancement de consigne par pilotage d'une composante de pas collectif dudit pas des pales (16) de ladite au moins une hélice (15), la vitesse d'avancement de consigne étant nulle.

13. Procédé selon la revendication 12,
où la régulation (STP6.1) avec le système de pilotage automatique (20) d'une vitesse d'avancement courante en fonction d'une vitesse d'avancement de consigne comporte les étapes suivantes :
- détermination d'une commande collective d'hélice avec une boucle de régulation de vitesse, avec un contrôleur (60) du système de pilotage automatique (20), asservissant la vitesse d'avancement courante en fonction de la vitesse d'avancement de consigne,
- transmission de ladite commande collective d'hélice à au moins un actionneur d'hélice (26) dudit système de pilotage automatique (20), ladite commande collective d'hélice étant porteuse d'un ordre de pilotage d'une composante de pas collectif dudit pas des pales (16) de ladite au moins une hélice (15).

14. Aéronef (1) ayant au moins une aile (3) ainsi qu'au moins une voilure tournante (10) et au moins une hélice (15), l'aéronef (1) comprenant un système de pilotage automatique (20),
**caractérisé en ce que** ledit système de pilotage automatique (20) est configuré pour appliquer le procédé selon l'une quelconque des revendications 1 à 13.

## Patentansprüche

1. Schwebeflugverfahren für ein Luftfahrzeug (1) mit mindestens einem Flügel (3) sowie mindestens einem Drehflügel (10) und mindestens einem Propeller (15), wobei das Luftfahrzeug (1) ein Autopilotsystem (20) umfasst, das einen Anstellwinkel der Blätter (11) des mindestens einen Drehflügels (10) und einen Anstellwinkel der Blätter (16) des mindestens einen Propellers (15) während einer Schwebeflugphase (PHAS0) an einer stationären Sollposition mit gesteuertem Soll-Nickwinkel steuert, wobei das Verfahren eine Änderungsphase (PHAS1) der Sollposition umfasst, wobei die Änderungsphase (PHAS1) eine Erzeugung (STP4.1) eines Bewegungsbefehls mit einer steuernden Mensch-Maschine-Schnittstelle (75) umfasst,
**dadurch gekennzeichnet, dass** die Änderungsphase (PHAS1) eine von dem Bewegungsbefehl abhängige Bestimmung (STP4.2) einer Soll-Seitengeschwindigkeit (VLAT*) und einer Soll-Winkelgeschwindigkeit (OMG*) um eine Gierachse des Luftfahrzeugs (1) mit dem Autopilotsystem (20) und eine Bewegung (STP4.3) des Luftfahrzeugs mit dem Autopilotsystem (20) mit dem Soll-Nickwinkel (TANG*) in Abhängigkeit von der Soll-Winkelgeschwindigkeit (OMG*) und der Soll-Seitengeschwindigkeit (VLAT*) umfasst.

2. Verfahren nach Anspruch 1,
bei dem der Bewegungsbefehl die Soll-Winkelgeschwindigkeit (OMG*) überträgt und die von dem Bewegungsbefehl abhängige Bestimmung (STP4.2) einer Soll- Seitengeschwindigkeit (VLAT*) und einer Soll-Winkelgeschwindigkeit (OMG*) um eine Gierachse des Luftfahrzeugs (1) eine Transformation der Soll-Winkelgeschwindigkeit (OMG*) mit dem Autopilotsystem (20) in die Soll- Seitengeschwindigkeit (VLAT*) in Abhängigkeit von einem Soll-Radius (R*) umfasst.

3. Verfahren nach Anspruch 1,
bei dem der Bewegungsbefehl die Soll- Seitengeschwindigkeit (VLAT*) überträgt und die von dem Bewegungsbefehl abhängige Bestimmung (STP4.2) einer Soll-Lateralgeschwindigkeit (VLAT*) und einer Soll-Winkelgeschwindigkeit (OMG*) um eine Gierachse des Luftfahrzeugs (1) eine Transformation der Soll-Seitengeschwindigkeit (VLAT*) mit dem Autopilotsystem (20) in die Soll-Winkelgeschwindigkeit (OMG*) in Abhängigkeit von einem Soll-Radius (R*) umfasst.

4. Verfahren nach einem der Ansprüche 2 bis 3,
bei dem das Verfahren eine Parametrierung (STP4.0) des Sollradius (R*) mit einer Parametrierungs-Mensch-Maschine-Schnittstelle (77) umfasst.

5. Verfahren nach einem der Ansprüche 1 bis 4,
bei dem die besagte Bewegung (STP4.3) mit dem Autopilotsystem des Luftfahrzeugs (1) eine Regelung (STP5) eines Anstellwinkels der Blätter (11) des mindestens einen Drehflügels (10) mit dem Autopilotsystem (20) in Abhängigkeit von mindestens dem Soll-Nickwinkel (TANG*) und der Soll-Lateralgeschwindigkeit (VLAT*) und eine Regelung (STP7) einer differentiellen Anstellwinkelkomponente der Blätter (11, 16) zweier rotierender Organe mit dem Autopilotsystem (20) in Abhängigkeit von der Soll-Winkelgeschwindigkeit (OMG*)umfasst, wobei die beiden rotierenden Organe zwei besagte Drehflügel (10) oder zwei besagte Propeller (15) umfassen.

6. Verfahren nach Anspruch 5,
bei dem die Regelung (STP5) eines Anstellwinkels der Blätter (11) des mindestens einen Drehflügels (10) die folgenden Schritte umfasst:
- Regeln (STP5.1) eines aktuellen Nickwinkels (TANG) mit dem Autopilotsystem (20)als Funktion des Soll-Nickwinkels (TANG*) durch Ansteuerung einer zyklischen Längsanstellwinkelkomponente der Blätter (11) des mindestens einen Drehflügels (10),
- Regeln (STP5.2) einer aktuellen Seitengeschwindigkeit mit dem Autopilotsystem (20) in Abhängigkeit von der Soll-Seitengeschwindigkeit (VLAT*) durch Steuern einer zyklischen Seitenanstellwinkelkomponente der Blätter (11) des mindestens einen Drehflügels (10),
- Regeln (STP5.3) einer aktuellen Höhe mit dem Autopilotsystem (20) in Abhängigkeit von einer Sollhöhe der Sollposition durch Steuerung einer kollektiven Anstellwinkelkomponente der Blätter (11) des mindestens einen Drehflügels (10).

7. Verfahren nach Anspruch 6,
bei dem die Regelung (STP5.1) eines aktuellen Nickwinkels mit dem Autopilotsystem (20) in Abhängigkeit von dem Soll-Nickwinkel (TANG*) die folgenden Schritte umfasst:
- Messen eines aktuellen Nickwinkels,
- Bestimmen eines zyklischen Längssteuerbefehls mit einem Nickwinkel-Regelkreis mit einer Steuerung (60) des Autopilotsystems (20), die den aktuellen Nickwinkel in Abhängigkeit von dem Soll-Nickwinkel(TANG*) regelt,
- Übertragen des zyklischen Längssteuerbefehls an mindestens ein Rotorstellglied (23) für die zyklische Längsanstellwinkel des Autopilotsystems (20), wobei der zyklische Längssteuerbefehl einen Befehl zum Steuern einer zyklischen Längsanstellwinkelkomponente des Anstellwinkels der Blätter (11) des mindestens einen Drehflügels (10) überträgt.

8. Verfahren nach einem der Ansprüche 6 bis 7,
bei dem das Regeln (STP5.2) einer aktuellen Seitengeschwindigkeit mit dem Autopilotsystem (20) in Abhängigkeit von einer Soll-Seitengeschwindigkeit (VLAT*) die folgenden Schritte umfasst:
- Bestimmen eines zyklischen Seitensteuerbefehls mit einem Seitenregelkreis, mit einer Steuerung (60) des Autopilotsystems (20), die die aktuelle Seitengeschwindigkeit in Abhängigkeit von der Soll-Seitengeschwindigkeit (VLAT*) regelt,
- Übertragen des zyklischen Seitensteuerbefehls an mindestens ein Rotorstellglied (24) für den zyklische Seitenanstellwinkel des Autopilotsystems (20), wobei der zyklische Seitensteuerbefehl einen Befehl zum Steuern einer zyklischen Seitenanstellwinkelkomponente des Anstellwinkels der Blätter (11) des mindestens einen Drehflügels (10) überträgt.

9. Verfahren nach einem der Ansprüche 6 bis 8,
bei dem das Regeln (STP5.3) einer aktuellen Höhe mit dem Autopilotsystem (20) in Abhängigkeit von einer Sollhöhe die folgenden Schritte umfasst:
- Bestimmen eines kollektiven Rotorsteuerbefehls mit einem Höhenregelkreis, mit einer Steuerung (60) des Autopilotsystems (20), die die aktuelle Höhe in Abhängigkeit von der Sollhöhe regelt,
- Übertragen des kollektiven Rotorsteuerbefehls an mindestens ein Rotorstellglied (21) des Autopilotsystems (20), wobei der kollektive Befehl einen Befehl zum Steuern einer kollektiven Anstellwinkelkomponente des Anstellwinkels der Blätter (11) des mindestens einen Drehflügels (10) überträgt.

10. Verfahren nach einem der Ansprüche 5 bis 9,
bei dem das Regeln (STP7) einer differentiellen Anstellwinkelkomponente der Blätter (11, 16) zweier rotierender Organe mit dem Autopilotsystem (20) ein Regeln einer aktuellen Winkelgeschwindigkeit um die Gierachse mit dem Autopilotsystem (20) in Abhängigkeit von der Soll-Winkelgeschwindigkeit (OMG*) durch Steuern der differentiellen Anstellwinkelkomponente umfasst.

11. Verfahren nach Anspruch 10,
bei dem das Regeln (STP7) einer aktuellen Winkelgeschwindigkeit um die Gierachse mit dem Autopilotsystem (20) in Abhängigkeit von der Soll-Winkelgeschwindigkeit (OMG*) die folgenden Schritte umfasst:
- Bestimmen eines Differenzbefehls mit einem Differenzregelkreis mit einem Regler (60) des Autopilotsystems (20), der die aktuelle Winkelgeschwindigkeit als Funktion der Soll-Winkelgeschwindigkeit(OMG*) regelt,
- Übertragen des Differenzbefehls an mindestens ein Kursstellglied (25), wobei der Differenzbefehl einen Befehl zum Ansteuern einer differentiellen Anstellwinkelkomponente des Anstellwinkels der Blätter (11, 16) der beiden rotierenden Organe überträgt.

12. Verfahren nach einem der Ansprüche 1 bis 11,
bei dem die Bewegung mit dem Autopilotsystem des Luftfahrzeugs (1) eine Regelung (STP6) eines Blattanstellwinkels (16) des mindestens einen Propellers (15) umfasst, die eine Regelung (STP6.1) mit dem Autopilotsystem (20) einer aktuellen Vorwärtsgeschwindigkeit in Abhängigkeit von einer Soll-Reisegeschwindigkeit durch Steuerung einer kollektiven Blattanstellkomponente des Blattanstellwinkels (16) des mindestens einen Propellers (15) umfasst, wobei die Soll-Reisegeschwindigkeit null ist.

13. Verfahren nach Anspruch 12,
bei dem das Regeln (STP6.1) einer aktuellen Reisegeschwindigkeit mit dem Autopilotsystem (20) in Abhängigkeit von einer Soll-Reisegeschwindigkeit die folgenden Schritte umfasst:
- Bestimmen eines kollektiven Propellersteuerbefehls mit einem Geschwindigkeitsregelkreis mit einer Steuerung (60) des Autopilotsystems (20), die die aktuelle Reisegeschwindigkeit in Abhängigkeit von der Soll-Reisegeschwindigkeit regelt,
- Übertragen des kollektiven Propellersteuerbefehls an mindestens ein Propellerstellglied (26) des Autopilotsystems (20), wobei der kollektive Propellersteuerbefehl einen Befehl zum Steuern einer kollektiven Anstellwinkelkomponente des Anstellwinkels der Blätter (16) des mindestens einen Propellers (15) überträgt.

14. Luftfahrzeug (1) mit mindestens einem Flügel (3), mindestens einem Drehflügel (10) und mindestens einem Propeller (15), wobei das Luftfahrzeug (1) ein Autopilotsystem (20) umfasst,
**dadurch gekennzeichnet, dass** das Autopilotsystem (20) konfiguriert ist, um das Verfahren nach einem der Ansprüche 1 bis 13 anzuwenden.

## Claims

1. A stationary flight method of an aircraft (1) having at least one wing (3) as well as at least one rotary wing (10) and at least one propeller (15), the aircraft (1) comprising an autopilot system (20) controlling a pitch of blades (11) of said at least one rotary wing (10) and a pitch of blades (16) of said at least one propeller (15) during a stationary flight phase (PHAS0) at a controlled setpoint pitch angle at controlled pitch angle, the method comprising a phase of modifying (PHAS1) the setpoint position, said change phase (PHAS1) comprising a generation (STP4.1) of a movement order with a man-machine interface for controlling (75),
**characterized in that** said modifying phase (PHAS1) comprises a determination (STP4.2) as a function of said order of movement of a setpoint lateral speed (VLAT*) and of a setpoint angular speed (OMG*) about a yaw axis of the aircraft (1) with the autopilot system (20), and a movement (STP4.3) of the aircraft with the autopilot system (20) with said setpoint pitch angle (TANG*) as a function of the setpoint angular speed (OMG*) and of the setpoint lateral speed (VLAT*).

2. Method according to claim 1,
where said movement order is carrying the setpoint angular speed (OMG*) and the determination (STP4.2) as a function of said order of movement of a setpoint lateral speed (VLAT*) and of a setpoint angular speed (OMG*) about a yaw axis of the aircraft (1) comprises a transformation with the autopilot system (20) of the setpoint angular speed (OMG*) at the setpoint lateral speed (VLAT*) as a function of a setpoint radius (R*).

3. Method according to claim 1,
where said movement order is carrying the setpoint lateral speed (VLAT*) and the determination (STP4.2) as a function of said order of movement of a setpoint lateral speed (VLAT*) and of a setpoint angular speed (OMG*) about a yaw axis of the aircraft (1) comprises a transformation with the autopilot system (20) of the setpoint lateral speed (VLAT*) into the setpoint angular speed (OMG*) as a function of a setpoint radius (R*).

4. Method according to any of claims 2 to 3,
wherein the method comprises a setting (STP4.0) of said setpoint radius (R*) with a parameterizing man-machine interface (77).

5. The method according to any of claims 1 to 4,
where said movement (STP4.3) with the autopilot system of the aircraft (1) comprises a regulation (STP5) with the autopilot system (20) of a pitch of blades (11) of said at least one rotary wing (10) as a function at least of the setpoint pitch angle (TANG*) and of the setpoint lateral speed (VLAT*) and a regulation (STP7) with the autopilot system (20) of a component of differential pitch of blades (11, 16) of two rotary members as a function of the setpoint angular speed (OMG*), said two rotary members comprising two said rotary airfoils (10) or two said propellers (15).

6. Method according to claim 5,
where said regulating (STP5) of a blade pitch (11) of said at least one rotary wing (10) comprises the following steps:
- regulating (STP5.1) with the autopilot system (20) a current pitch angle (TANG) as a function of the setpoint pitch angle (TANG*) by controlling a longitudinal cyclic pitch component of said pitch of the blades (11) of said at least one rotary wing (10),
- regulating (STP5.2) with the autopilot system (20) a current lateral speed as a function of the setpoint lateral speed (VLAT*) by controlling a lateral cyclic pitch component of said pitch of the blades (11) of said at least one rotary wing (10),),
- regulating (STP5.3) with the autopilot system (20) a current altitude as a function of a setpoint altitude of the setpoint position by controlling a collective pitch component of said pitch of the blades (11) of said at least one rotary wing (10).

7. Method according to claim 6,
where the regulation (STP5.1) with the autopilot system (20) of a current pitch angle as a function of the setpoint pitch angle (TANG*) comprises the following steps:
- measuring a current pitch angle,
- determining a longitudinal cyclic control with a pitch control loop, with a controller (60) of the autopilot system (20), controlling the current pitch angle as a function of said setpoint pitch angle (TANG*),
- transmitting said longitudinal cyclic control to at least one longitudinal cyclic pitch rotor actuator (23) of said autopilot system (20), said longitudinal cyclic control bearing a control order for a longitudinal cyclic pitch component of said pitch of the blades (11) of said at least one rotary wing (10).

8. Method according to any of claims 6 to 7,
wherein the regulation (STP5.2) with the autopilot system (20) of a current lateral speed as a function of a setpoint lateral speed (VLAT*) comprises the following steps:
- determining a lateral cyclic command with a lateral control loop, with a controller (60) of the autopilot system (20), controlling the current lateral speed as a function of the setpoint lateral speed (VLAT*),
- transmitting said lateral cyclic control to at least one lateral cyclic pitch rotor actuator (24) of said autopilot system (20), said lateral cyclic command carrying an order to control a lateral cyclic pitch component of said pitch of the blades (11) of said at least one rotary wing (10).

9. Method according to any of claims 6 to 8,
where the regulation (STP5.3) with the autopilot system (20) of a current altitude as a function of a setpoint altitude comprises the following steps:
- determining a collective rotor control with an altitude regulation loop, with a controller (60) of the autopilot system (20), controlling the current altitude as a function of said setpoint altitude,
- transmitting said collective rotor control to at least one rotor actuator (21) of said autopilot system (20), said collective control being carrying an order to control a collective pitch component of said pitch of the blades (11) of said at least one rotary wing (10).

10. Method according to any of claims 5 to 9,
where the regulation (STP7) with the autopilot system (20) of a component of differential pitch of blades (11, 16) of two rotary members comprises regulation with the autopilot system (20) of a current angular speed about the yaw axis as a function of the setpoint angular speed (OMG*) by controlling the differential component.

11. Method according to claim 10,
where the regulation (STP7) with the autopilot system (20) of a current angular speed about the yaw axis as a function of the setpoint angular speed (OMG*) comprises the following steps:
- determining a differential control with a differential control loop with a controller (60) of the autopilot system (20), controlling the current angular speed as a function of the setpoint angular speed (OMG*),
- transmitting said differential command to at least one heading actuator (25), said differential control being carrying an order to control a component of differential pitch of said pitch of the blades (11, 16) of the two rotary members.

12. Method according to either claim 1 or claim 11,
where said movement with the autopilot system of the aircraft (1) comprises a regulation (STP6) of a pitch of blades (16) of said at least one propeller (15) which comprises a regulation (STP6.1) with the autopilot system (20) of a current forward speed as a function of a setpoint speed of advance by controlling a collective pitch component of said pitch of the blades (16) of said at least one propeller (15), the setpoint speed of advance being zero.

13. Method according to claim 12,
where the regulation (STP6.1) with the autopilot system (20) of a current forward speed as a function of a setpoint speed of advance comprises the following steps:
- determining a collective propeller command with a speed control loop, with a controller (60) of the autopilot system (20), controlling the current forward speed as a function of the setpoint forward speed,
- transmitting said collective propeller command to at least one propeller actuator (26) of said autopilot system (20), said collective propeller control carrying an order to control a collective pitch component of said blade pitch (16) of said at least one propeller (15).

14. An aircraft (1) having at least one wing (3) as well as at least one rotary wing (10) and at least one propeller (15), the aircraft (1) comprising an autopilot system (20),
**characterized in that** said control system (20) is configured to apply the method according to any of claims 1 to 13.
